# EUROPÄISCHE PATENTSCHRIFT

(11) **EP 4 041 520 B1**
(45) Veröffentlichungstag und Bekanntmachung des Hinweises auf die Patenterteilung: **01.05.2024**
(21) Anmeldenummer: 20785514.9
(22) Anmeldetag: 07.10.2020
(51) Int. Cl.: B29C 44/14, B29C 44/44, B29C 69/02, B29C 70/46, B32B 5/02, B32B 5/12, B32B 5/18, B60N 2/68, B60N 2/70, B32B 5/24

(54) **VERFAHREN ZUR HERSTELLUNG EINES FAHRZEUGSITZES ENTHALTEND FASERVERBUNDWERKSTOFF UND EXPANDIERTE THERMOPLASTISCHE KUNSTSTOFFE**
METHOD FOR MANUFACTURING A VEHICLE SEAT CONTAINING FIBER COMPOSITE MATERIAL AND EXPANDED THERMOPLASTICS
PROCÉDÉ DE FABRICATION D'UN SIÈGE DE VÉHICULE CONTENANT UN MATÉRIAU COMPOSITE RENFORCÉ DE FIBRES ET DES THERMOPLASTIQUES EXPANSÉS

(30) Priorität: 07.10.2019 EP 19201600
(43) Veröffentlichungstag der Anmeldung: 17.08.2022
(73) Patentinhaber: Covestro Deutschland AG, 51373 Leverkusen (DE)
(72) Erfinder: KLEIN, Andreas, 51371 Leverkusen (DE); GROSSER, Ulrich, 51515 Kürten (DE); BAUDACH, Felix, 51375 Leverkusen (DE)
(74) Vertreter: Levpat
(86) Internationale Anmeldenummer: PCT/EP2020/078035
(87) Internationale Veröffentlichungsnummer: WO 2021/069462

(56) Entgegenhaltungen:
- WO-A1-2005/018916
- WO-A1-2015/044099
- DE-A1- 10 253 825
- DE-A1-102011 076 408
- DE-A1-102015 015 016
- US-A1- 2008 277 987
- US-A1- 2016 361 893

## Beschreibung

Die vorliegende Erfindung betrifft ein Verfahren zur Herstellung eines Sitzes für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff. Das Verfahren umfasst mindestens die folgenden Schritte (A) Bereitstellen mindestens einer ersten und mindestens einer zweiten Lage Verbundwerkstoff jeweils enthaltend Fasern, welche in einem thermoplastischen Kunststoff eingebettet sind, (B) Thermoverformen der mindestens einen ersten Lage Verbundwerkstoff zu einer unteren Sitzschale, (C) Thermoverformen der mindestens einen zweiten Lage Verbundwerkstoff zu einer oberen Sitzschale, (D) Anordnen der unteren Sitzschale und der oberen Sitzschale in einem Werkzeug, so dass zwischen den beiden Sitzschalen ein Spalt ausgebildet wird, (E) Einbringen von aufgeschäumten Partikel aus einem thermoplastischen Kunststoff in den Spalt, und (F) Verpressen der beiden Sitzschalen und der aufgeschäumten Partikel, um den Sitz zu erhalten. Des Weiteren betrifft die vorliegende Erfindung die Verwendung des Sitzes in einem Fahrzeug, bevorzugt in einem Landfahrzeug, in einem Wasserfahrzeug und/oder in einem Luftfahrzeug.

In der Schrift WO 2015/044099 wird ein mehrschichtiges Strukturbauteil umfassend eine erste und eine zweite Faserverbundschicht und eine dazwischen angeordnete Schicht aus aufgeschäumtem Kunststoff offenbart, wobei die erste und die zweite Faserverbundschicht jeweils mindestens eine Faserlage aus einem Fasermaterial aufweisen, die in eine auf einem thermoplastischen Kunststoff basierende Matrix, insbesondere in ein thermoplastisches Polyurethan, eingebettet ist. Des Weiteren wird ein Verfahren zur Herstellung des Bauteils beschrieben, bei dem ein erstes und ein zweites Faserverbundblech bereitgestellt werden, diese zu entsprechenden Faserverbund-Halbzeugen thermogeformt werden, und dieses Halbzeuge so in einem Schäumwerkzeug angeordnet werden, dass sich zwischen den Halbzeugen ein Hohlraum ausgebildet. Dieser Hohlraum wird durch Einspritzen einer in dem Spalt aufschäumenden Kunststoffmischung gefüllt. Die Dichte des so erhaltenen, aufgeschäumten Schaumkerns wird mit 50 bis 600 kg/m³ angegeben. Des Weiteren wird die Verwendung der genannten Strukturbauteile als Karosserieteile offenbart.

Die Schrift JP2019072859 offenbart ein Sandwichmaterial mit hoher Schlagzähigkeit für Anwendungen im Transportwesen, als Konstruktionsmaterial oder in Haushaltsanwendungen. Dazu wird eine Schicht aus einem thermoplastischen Schaummaterial zwischen zwei Lagen aus verstärktem thermoplastischen Kunststoff eingebettet. Als thermoplastische Kunststoffe werden vor allem Propylen-basierte Kunststoffe offenbart.

Die Schrift DE 10 2011 076 408 A1 offenbart ein Verfahren zur Herstellung eines Sitzes, mindestens umfassend die folgenden Schritte: Bereitstellen mindestens einer ersten und mindestens einer zweiten Lage Verbundwerkstoff jeweils enthaltend Fasern, welche jeweils in einem thermoplastischen Kunststoff eingebettet sind und Verpressen der beiden Sitzschalen und der aufgeschäumten Partikel, um den Sitz zu erhalten.

Der aktuelle Aufbau eines Sitzes in einem Fahrzeug, insbesondere in einem Kraftfahrzeug, umfasst verschiedene Teile, bevorzugt mindestens ein Sitzteil und mindestens ein Rückenteil, welche jeweils einen Rahmen aufweisen, der aus entsprechend dimensionierten Metallrohren durch Biegen und Schweißen erhalten wird. Die einzelnen Teile dieses bekannten Fahrzeugsitzes werden mit Federelementen, insbesondere Stahlfedern, miteinander verbunden. An diesen Metallrahmen werden durch Spritzguss erhaltene Formteilstücke angebracht, und anschließend wird eine Schicht aus einem Polyurethanschaumstoff aufgetragen. Das Ganze wird dann mit einem Sitzbezug aus Stoff kaschiert. Die Rückwand des Sitzes wird meistens mit einem Cover aus Spritzguss versehen, das ggf. noch lackiert wird. Die Nachteile einer solchen Konstruktion sind das hohe Gewicht, die Verwendung einer großen Anzahl an Bauteilen, die Notwendigkeit viele verschiedene Teile miteinander verbinden zu müssen, sowie das Problem, dass in einem solchen Sitz viele verschiedene Materialien vorliegen, was das Recycling deutlich erschwert.

Wünschenswert ist, einen Sitz für die Verwendung in einem Fahrzeug zur Verfügung zu stellen, der sich durch eine schlanke Bauweise auszeichnet, welche den aktuell vorherrschenden Designtrends entspricht. Gleichzeitig muss der Sitz aber die zurzeit geltenden Sicherheitsanforderungen erfüllen. Des Weiteren soll der Sitz eine reduzierte Anzahl an Einzelteilen und insgesamt ein niedriges Gewicht bei gleichzeitig hohem Sitzkomfort aufweisen. Das in dem Sitz verwendete Material soll sich darüber hinaus durch ein günstiges Brandverhalten und niedrige Emissionen (Fog A und Fog B) auszeichnen.

Aufgabe der vorliegenden Erfindung ist es daher, einen Fahrzeugsitz bereitzustellen, der sich durch eine schlanke Bauweise auszeichnet, welche den aktuell vorherrschenden Designtrends entspricht, und der gleichzeitig die zurzeit geltenden Sicherheitsanforderungen, insbesondere bezüglich mechanischer Belastbarkeit, erfüllt. Des Weiteren soll der Sitz eine reduzierte Anzahl an Einzelteilen und insgesamt ein niedrigeres Gewicht bei gleichzeitig hohem Sitzkomfort aufweisen. Das in dem Sitz verwendete Material soll sich darüber hinaus durch ein günstiges Brandverhalten und niedrige Emissionen (Fog A und Fog B) auszeichnen.

Diese Aufgaben werden durch ein Verfahren gemäß Anspruch 1 gelöst.

Offenbart ist weiterhin ein Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff, wobei auf der Vorderseite und der Rückseite des erfindungsgemäßen Sitzes und/oder in verschiedenen Bereichen des Sitzes, beispielsweise Rückenteil, Sitzteil und dem das Rückenteil und das Sitzteil verbindenden Bereich, nicht gleich viele erste und zweite Lagen Verbundwerkstoff vorliegen.

Offenbart ist weiterhin ein Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff, wobei es sich bei den Fasern jeweils um unidirektional orientierte Endlosfasern handelt und die unidirektional orientierten Endlosfasern in der mindestens einen ersten Lage und/oder in der mindestens einen zweiten Lage in verschiedenen Teilen des erfindungsgemäßen Sitzes parallel zueinander oder einem Winkel von 30° bis 130° zueinander angeordnet sind, wobei die einzelnen Winkel unterschiedlich sein können.

Offenbart ist weiterhin ein Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff.

Das erfindungsgemäße Verfahren zur Herstellung eines entsprechenden Sitzes umfasst mindestens die folgenden Schritte:
(A) Bereitstellen mindestens einer ersten und mindestens einer zweiten Lage Verbundwerkstoff jeweils enthaltend Fasern, welche jeweils in einem thermoplastischen Kunststoff eingebettet sind,
(B) Thermoverformen der mindestens einen ersten Lage Verbundwerkstoff zu einer unteren Sitzschale,
(C) Thermoverformen der mindestens einen zweiten Lage Verbundwerkstoff zu einer oberen Sitzschale,
(D) Anordnen der unteren Sitzschale und der oberen Sitzschale in einem Werkzeug, so dass zwischen den beiden Sitzschalen ein Spalt ausgebildet wird,
(E) Einbringen von aufgeschäumten Partikeln aus einem thermoplastischen Kunststoff in den Spalt, und
(F) Verpressen der beiden Sitzschalen und der aufgeschäumten Partikel, um den Sitz zu erhalten.

Offenbart ist weiterhin die Verwendung des erfindungsgemäßen Sitzes in einem Fahrzeug, bevorzugt in einem Landfahrzeug, in einem Wasserfahrzeug und/oder in einem Luftfahrzeug.

Die vorliegende Erfindung wird im Folgenden detailliert beschrieben:
Die vorliegende Erfindung betrifft einen Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff.

Der erfindungsgemäße Sitz ist im Allgemeinen für jedes dem Fachmann bekannte Fahrzeug geeignet, insbesondere für ein Landfahrzeug, für ein Wasserfahrzeug und/oder ein für ein Luftfahrzeug. Erfindungsgemäße Beispiele für Landfahrzeuge sind Kraftfahrzeuge, Lastkraftfahrzeuge. Erfindungsgemäße Beispiele für Wasserfahrzeuge sind Schiffe, Fähren und Kreuzfahrschiffe. Erfindungsgemäße Beispiele für Luftfahrzeuge sind Flugzeuge und Hubschrauber. Der erfindungsgemäße Sitz kann dabei an jeder in dem jeweiligen Fahrzeug vorhandenen Position angeordnet sein, beispielsweise als Fahrer- bzw. Pilotensitz oder als Passagiersitz.

Der erfindungsgemäße Sitz umfassend mindestens ein mehrschichtiges Strukturbauteil.

In einer möglichen Ausführungsform umfasst der erfindungsgemäße Sitz mehr als ein, d.h. zwei, drei, vier oder mehr, entsprechend mehrschichtige Strukturbauteile. Beispielsweise können in einem erfindungsgemäßen Sitz ein entsprechendes Strukturteil das Sitzteil und ein weiteres entsprechend ausgestaltetes Strukturteil das Rückenteil ausbilden. In dieser Ausführungsform sind die vorhandenen Strukturteile durch dem Fachmann bekannte Verbindungen, beispielsweise mit Gelenken oder Federn, miteinander verbunden.

In einer bevorzugten Ausführungsform betrifft die vorliegende Erfindung den erfindungsgemäßen Sitz, wobei er aus einem entsprechend geformten, mehrschichtigen Strukturbauteil besteht. In dieser bevorzugten Ausführungsform ist der erfindungsgemäße Sitz einteilig ausgeführt, d.h. der gesamte Sitz besteht aus einem entsprechend geformten, mehrschichtigen Strukturbauteil.

In einer weiter bevorzugten Ausführungsform der vorliegenden Erfindung umfasst das mehrschichtige Strukturbauteil daher ein Rückenteil, ein Sitzteil und einen das Rückenteil und das Sitzteil verbindenden Bereich. In einer weiter bevorzugten Ausführungsform besteht das mehrschichtige Strukturbauteil aus einem Rückenteil, einem Sitzteil und einem das Rückenteil und das Sitzteil verbindenden Bereich.

Der erfindungsgemäße Sitz kann im Allgemeinen jede dem Fachmann als geeignet erscheinende Maße aufweisen. Die Breite des erfindungsgemäßen Sitzes beträgt beispielsweise 380 bis 495 mm, bevorzugt 440 bis 450 mm. Die Höhe des erfindungsgemäßen Sitzes beträgt beispielsweise 900 bis 1200 mm, bevorzugt 910 bis 930 mm. Die Tiefe des erfindungsgemäßen Sitzes beträgt beispielsweise 500 bis 700 mm, bevorzugt 620 bis 640 mm.

Die Dicke der zwischen der mindestens einen ersten Lage Verbundwerkstoff und der mindestens einen zweiten Lage Verbundwerkstoff angeordneten Schicht aus mindestens einem geschäumten thermoplastischen Kunststoff beträgt im Allgemeinen 2 bis 300 mm, bevorzugt 5 bis 150 mm, besonders bevorzugt 10 bis 100 mm. Die Dicke dieser Schicht kann erfindungsgemäß über den gesamten Sitz betrachtet gleich sein. In einer weiteren erfindungsgemäßen Ausführungsform ist die Dicke dieser Schicht über den gesamten Sitz betrachtet nicht gleich, sondern variiert um 50 % der maximalen Dicke.

Es ist erfindungsgemäß möglich und bevorzugt, dass die Dicke der zwischen der mindestens einen ersten Lage Verbundwerkstoff und der mindestens einen zweiten Lage Verbundwerkstoff angeordneten Schicht aus mindestens einem geschäumten thermoplastischen Kunststoff des Sitzteils an der dem verbindenden Bereich abgewandten Seite, d.h. am unteren Ende des Sitzteils, geringer ist als die Dicke in der Nähe des verbindenden Bereichs. Des Weiteren ist es bevorzugt, dass die Dicke der zwischen der mindestens einen ersten Lage Verbundwerkstoff und der mindestens einen zweiten Lage Verbundwerkstoff angeordneten Schicht aus mindestens einem geschäumten thermoplastischen Kunststoff des Rückenteils an der dem verbindenden Bereich abgewandten Seite, d.h. am oberen Ende des Rückenteils, geringer ist als die Dicke in der Nähe des verbindenden Bereichs.

Der Winkel zwischen Sitzteil und Rückenteil des erfindungsgemäßen Sitzes kann im Allgemeinen alle dem Fachmann als geeignet erscheinenden Werte annehmen, beispielsweise beträgt der Winkel zwischen Sitzteil und Rückenteil des erfindungsgemäßen Sitzes 80° bis 150°, bevorzugt 100° bis 110°.

Die Dicke des erfindungsgemäßen Sitzes, insbesondere des Sitzteils, des Rückteils und/oder des Bereichs, der Sitzteil und Rückenteil verbindet, kann im Allgemeinen jeden dem Fachmann als geeignet erscheinenden Wert annehmen, beispielsweise beträgt die Dicke des erfindungsgemäßen Sitzes, insbesondere des Sitzteils, des Rückteils und/oder des Bereichs, der Sitzteil und Rückenteil verbindet, 5 bis 200 mm, bevorzugt 10 bis 50 mm.

Es ist erfindungsgemäß möglich und bevorzugt, dass die Dicke des erfindungsgemäßen Sitzes nicht über das gesamte Bauteil gleich ist, sondern in den oben genannten Grenzen variiert. Besonders bevorzugt ist, dass die Dicke des Sitzteils an der dem verbindenden Bereich abgewandten Seite, d.h. am unteren Ende des Sitzteils, geringer ist als die Dicke in der Nähe des verbindenden Bereichs. Des Weiteren ist es bevorzugt, dass die Dicke des Rückenteils an der dem verbindenden Bereich abgewandten Seite, d.h. am oberen Ende des Rückenteils, geringer ist als die Dicke in der Nähe des verbindenden Bereichs. Auch können die in dem erfindungsgemäßen Sitz vorliegenden Bereiche an unterschiedlichen Stellen unterschiedlich dick ausgeführt sein, beispielsweise um im Gebrauch und/oder einer Verformung des Sitzes während eines Unfalls an bestimmten Stellen stabiler bzw. weniger stabil ausgeführt zu sein. Die Unterschiede in den Dicken an den hier beschriebenen Stellen des erfindungsgemäßen Sitzes betragen dabei beispielsweise 2 bis 80%, bevorzugt 20 bis 40%.

Der erfindungsgemäße Sitz, insbesondere die einzelnen vorliegenden Bereiche, beispielswiese Sitzteil, Rückenteil und der das Sitzteil und das Rückenteil verbindende Bereich, können im Allgemeinen jede dem Fachmann als geeignet erscheinende Form aufweisen, beispielsweise Standardsitze oder Sportsitze.

Es ist erfindungsgemäß des Weiteren möglich, dass in dem erfindungsgemäßen Sitz, insbesondere in den einzelnen vorliegenden Bereiche, beispielswiese Sitzteil, Rückenteil und der das Sitzteil und das Rückenteil verbindende Bereich, Aussparungen vorliegen, d.h. die entsprechenden Bereiche werden nicht durchgängig von den oben genannten Materialien gebildet, sondern es liegen freie Bereiche vor, beispielsweise um Gewicht zu sparen und/oder die Durchsicht nach hinten für den Fahrer des Fahrzeugs zu ermöglichen oder zu verbessern. Diese Aussparungen nehmen in einer bevorzugten Ausführung 2% bis 50%, bevorzugt 5% bis 20% der Fläche des jeweiligen Bauteils ein.

Neben den hier explizit beschriebenen Komponenten des erfindungsgemäßen Sitzes, insbesondere das erfindungsgemäße Strukturteil, kann dieser im Allgemeinen alle dem Fachmann bekannten weiteren Anbauteile, Anschlüsse, Vorrichtungen etc. aufweisen.

Beispielhaft seien hier Rückhaltesysteme, insbesondere Anschnallgurte, Sensoren, Vorrichtungen zur Befestigung des erfindungsgemäßen Sitzes am Fahrzeug, elektrische Anschlüsse, Kopfteile, Sitzheizung.

Das in dem erfindungsgemäßen Sitz vorliegende Strukturbauteil umfassend mindestens eine erste und mindestens eine zweite Lage Verbundwerkstoff jeweils enthaltend Fasern, welche in einem thermoplastischen Kunststoff eingebettet sind.

Erfindungsgemäß kann für die genannte mindestens eine erste und mindestens eine zweite Lage im Allgemeinen jeder dem Fachmann bekannte Verbundwerkstoff enthaltend Fasern, die in einem thermoplastischen Kunststoff eingebettet sind, eingesetzt werden.

Als Fasern können erfindungsgemäß alle dem Fachmann bekannten Fasern eingesetzt werden, beispielsweise ausgewählt aus der Gruppe bestehend aus Endlosfasern, textilen Flächengebilden, insbesondere Geweben, und Mischungen davon.

Erfindungsgemäß bevorzugt ist der thermoplastische Kunststoff ausgewählt aus der Gruppe bestehend aus Polycarbonat, Polyamid, Polypropylen, Styrol-Acrylnitril-Copolymer (SAN), thermoplastischem Polyurethan, Acrylsäure-Butadien-StyrolCopolymer (ABS), besonders bevorzugt Polycarbonat, ganz besonders bevorzugt Homopolycarbonat und/oder Copolycarbonat.

In einer bevorzugten Ausführungsform der vorliegenden Erfindung wird für die mindestens eine erste Lage und die mindestens eine zweite jeweils ein Verbundwerkstoff eingesetzt, enthaltend Endlosfasern, wobei die Endlosfasern innerhalb der jeweiligen Lage unidirektional ausgerichtet sind und in einem auf Homopolycarbonat und/oder Copolycarbonat basierenden Kunststoff eingebettet sind.

In dieser bevorzugten Ausführungsform beträgt der Faservolumenanteil der jeweiligen Lage Verbundwerkstoff 10 bis 80 Vol.-%, besonders bevorzugt 20 bis 30 Vol.-%, ganz besonders bevorzugt 30 bis 60 Vol.-%.

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Verbundwerkstoff. Der Begriff Endlosfaser leitet sich davon ab, dass diese Fasern auf einer Rolle aufgewickelt vorliegen und während der Herstellung der einzelnen Verbundwerkstofflagen bevorzugt abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Verbundwerkstofflage übereinstimmt.

In den erfindungsgemäß vorliegenden Lagen Verbundwerkstoff liegen bevorzugt Endlosfasern vor. Erfindungsgemäß bevorzugt sind die vorliegenden Endlosfasern ausgewählt aus der Gruppe bestehend aus Glasfasern, Carbonfasern, Basaltfasern, Kunststofffasern, Spezialfasern und Mischungen davon, insbesondere Carbonfasern und/oder Glasfasern.

Weiter bevorzugt sind die als Endlosfasern eingesetzten Kunststoffasern ausgewählt aus der Gruppe bestehend aus Liquid-Crystal-Polymer-Fasern, Aramidfasern, Polyphenylensulfid-Fasern, Polyetherketon-Fasern, Polyetheretherketon-Fasern, Polyetherimid-Fasern und Mischungen davon.

Ganz besonders bevorzugt werden als Endlosfasern Carbonfasern mit einem E-Modul von größer 240 GPa, bevorzugt größer 245 GPa, besonders bevorzugt von 250 GPa oder mehr einzusetzen. Solche Kohlenstofffasern sind beispielsweise unter der Bezeichnung Pyrofil von der Firma Mitsubishi Rayon CO., LtD. im Handel erhältlich. Praktische Versuche haben gezeigt, dass sich diese Carbonfasern durch eine besonders gute Spreizbarkeit bei der Verarbeitung zu einer erfindungsgemäßen Verbundwerkstofflage auszeichnen.

In einer bevorzugten Ausführungsform betrifft die vorliegende Erfindung den erfindungsgemäßen Sitz, wobei die Fasern Endlosfasern sind, die innerhalb der jeweiligen Lage unidirektional ausgerichtet sind.

Im Rahmen der vorliegenden Erfindung bedeutet "unidirektional", dass die Endlosfasern im Wesentlichen der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Die erfindungsgemäß vorliegenden mindestens eine erste Lage und die mindestens eine zweite Lage weisen jeweils im Allgemeinen eine Dicke von 30 bis 1000 µm, bevorzugt 50 bis 500 µm, besonders bevorzugt 80 bis 300 µm, auf.

Die erfindungsgemäß eingesetzten mindestens eine erste Lage und die mindestens eine zweite Lage können mit den üblichen dem Fachmann bekannten Verfahren zur Herstellung von Faserverbundwerkstoffen hergestellt werden.

Gemäß einer bevorzugten Ausführungsform der Erfindung sind die vorliegenden Lagen Verbundwerkstoff herstellbar durch Auftragen eines geschmolzenen auf Polycarbonat basierenden Kunststoffs auf ein vorgeheiztes Endlos-Faserband unter Druck-Scher-Vibrationsbeaufschlagung. Ein derartiges Herstellungsverfahren ist in DE 10 2011 005 462 B3 beschrieben. Unter einem Endlos-Faserband wird erfindungsgemäß eine Mehrzahl von zusammengeführten Rovings verstanden, wobei es sich bei den Rovings um Bündel aus vielen Endlosfasern ohne Drall handelt.

In einer bevorzugten Ausführungsform betrifft die vorliegende Erfindung den erfindungsgemäßen Sitz, wobei die Fasern, bevorzugt die Endlosfasern, in dem Verbundwerkstoff in einem auf Homopolycarbonat und/oder Copolycarbonat basierenden Kunststoff eingebettet sind.

Als ein auf Polycarbonat basierender Kunststoff wird im Rahmen der vorliegenden Erfindung ein Kunststoff verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-%, Polycarbonat enthält. Anders ausgedrückt kann ein auf Polycarbonat basierender Kunststoff im Rahmen der vorliegenden Erfindung höchstens 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-%, einen oder mehrere von Polycarbonat verschiedene Kunststoffe als Blendpartner enthalten.

Gemäß einer besonderen Ausführungsform besteht der auf Polycarbonat basierende Kunststoff im Wesentlichen, insbesondere zu 100 Gew.-% aus Polycarbonat.

Wenn im Rahmen der vorliegenden Erfindung von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Gemäß einer besonderen Ausführungsform der Erfindung besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen.

Einzelheiten der Herstellung von Polycarbonaten sind dem Fachmann seit mindestens etwa 40 Jahren gut bekannt. Beispielhaft sei hier auf D. Freitag, U. Grigo, P.R. Müller, H. Nouvertné, BAYER AG, Polycarbonates in Encyclopedia of Polymer Science and Engineering, Volume 11, Second Edition, 1988, Seiten 648 bis 718 und auf U. Grigo, K. Kirchner und P.R. Müller Polycarbonate in Becker Braun, Kunststoff-Handbuch, Band 31, Polycarbonate, Polyacetale, Polyester, Celluloseester, Carl Hanser Verlag München, Wien 1992, Seiten 117 bis 299, verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasen-Grenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3`-Bis-(4-hydroxyphenyl)-phthalimid, 2-Alkyl-3,3'-Bis-(4-hydroxyphenyl)-phthalimide, wie 2-Butyl-3,3`-Bis-(4-hydroxyphenyl)-phthalimide, 2-Propyl-3,3`-Bis-(4-hydroxyphenyl)-phthalimide, 2-Ethyl-3,3`-Bis-(4-hydroxyphenyl)-phthalimide oder 2-Methyl-3,3 '-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5- dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US- A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 bis 25 Gew.-%, vorzugsweise 2,5 bis 25 Gew.-%, besonders bevorzugt 2,5 bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3,419,634, US-PS 3,189,662, EP 0 122 535, US 5,227,449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polya-ryletherketon, Styrolpolymerisate, insbesondere Polystyrol, Styrolcopolymere, insbesondere Styrolacrylnitrilcopolymer, Acrylnitrilbutadien-styrolblockcopolymere und Polyvinylchlorid einsetzen.

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive enthalten.

Erfindungsgemäß geeignete Additive sind beispielsweise ausgewählt aus der Gruppe bestehend aus Flammschutzmitteln, Antitropfmitteln, Thermostabilisatoren, Entformungsmitteln, Antioxidantien, UV-Absorbern, IR-Absorbern, Antistatika, optischen Aufhellern, Lichtstreumitteln, Farbmitteln wie Pigmente, auch anorganische Pigmente, Ruß und/oder Farbstoffe, anorganischen Füllstoffen und Mischungen davon. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102 oder EP-A 0 500 496 beschrieben.

Erfindungsgemäß bevorzugt eingesetzte auf Homopolycarbonat und/oder Copolycarbonat basierende Kunststoffe weisen im Allgemeinen eine Schmelzviskosität auf, die eine gute Verarbeitbarkeit gemäß der vorliegenden Erfindung gewährleistet. In einer bevorzugten Ausführungsform weisen die eingesetzten auf Homopolycarbonat und/oder Copolycarbonat basierenden Kunststoffe eine Schmelzviskosität von 100 bis 2000 Pa*s, weiter bevorzugt 130 bis 1300 Pa*s, auf. Die Bestimmung der Schmelzviskosität erfolgt mit dem Hochdruck Kapillarrheometer nach ISO 11443 aus 04-2014.

Erfindungsgemäß bevorzugt eingesetzte auf Homopolycarbonat und/oder Copolycarbonat basierende Kunststoffe weisen im Allgemeinen ein Molekulargewicht auf, das eine gute Verarbeitbarkeit gemäß der vorliegenden Erfindung gewährleistet. In einer bevorzugten Ausführungsform weisen die eingesetzten auf Homopolycarbonat und/oder Copolycarbonat basierenden Kunststoffe ein Molekulargewicht von 24000 bis 33000 g/mol, weiter bevorzugt von 26000 bis 31000 g/mol, auf. Die Bestimmung des Molekulargewichts erfolgt GPC Analytik DIN EN ISO/IEC 17025 aus 03-2018.

Die erfindungsgemäß vorliegende mindestens eine erste Lage Verbundwerkstoff und die mindestens eine zweite Lage Verbundwerkstoff können jeweils symmetrisch oder asymmetrisch aufgebaut sein. "Symmetrisch" bedeutet in diesem Zusammenhang, dass die vorhandenen Endlosfasern von beiden Seiten in im Wesentlichen gleichen Mengen eines thermoplastischen Kunststoffs eingebettet sind. "Asymmetrisch" bedeutet in diesem Zusammenhang, dass die vorhandenen Endlosfasern von beiden Seiten mit unterschiedlichen Mengen eines thermoplastischen Kunststoffs eingebettet sind, so dass die Endlosfasern näher an der Oberfläche der einen Seite der ersten Lage liegen als an der Oberfläche der anderen Seite der ersten Lage.

In einer bevorzugten Ausführungsform betrifft die vorliegende Erfindung den erfindungsgemäßen Sitz, wobei jeweils mehr als eine erste oder mehr als eine zweite Lage Verbundwerkstoff übereinander vorliegen. Beispielsweise können in dem erfindungsgemäßen Sitz 1, 2, 3, 4,5, 6, 7, 8, 9 oder 10 erste Lagen Verbundwerkstoff und 1, 2, 3, 4, 5, 6, 7, 8, 9, 10 zweite lagen Verbundwerkstoff vorliegen.

Die vorliegende Erfindung betrifft einen Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff, wobei auf der Vorderseite und der Rückseite des erfindungsgemäßen Sitzes und/oder in verschiedenen Bereichen des Sitzes, beispielsweise Rückenteil, Sitzteil und dem das Rückenteil und das Sitzteil verbindenden Bereich, nicht gleich viele erste und zweite Lagen Verbundwerkstoff vorliegen, d.h. dass unterschiedlich viele erste und zweite Lagen vorliegen, d.h. dass sich die Anzahl um mindestens 1 unterscheidet.

Die unterschiedliche Anzahl von Lagen auf der Vorderseite und der Rückseite des erfindungsgemäßen Sitzes ergeben entsprechend unterschiedliche Dicken dieser Bauteile.

Beispielsweise ist es möglich, dass auf der Rückseite des erfindungsgemäßen Sitzes mehr zweite Lagen Verbundwerkstoff vorliegen als auf der Vorderseite des erfindungsgemäßen Sitzes erste Lagen vorliegen oder dass auf der Vorderseite des erfindungsgemäßen Sitzes mehr erste Lagen Verbundwerkstoff vorliegen als auf der Rückseite des erfindungsgemäßen Sitzes zweite Lagen vorliegen. Das Vorhandensein von mehr Lagen Verbundwerkstoff auf einer Seite des erfindungsgemäßen Sitzes als auf der anderen Seite des erfindungsgemäßen Sitzes verbessert beispielsweise die Mechanik des Sitzes, insbesondere bei dessen Gebrauch oder im bei ungewollter Verformung im Rahmen eines Unfalls.

Es ist erfindungsgemäß auch möglich und bevorzugt, dass in bestimmten Bereichen des erfindungsgemäßen Sitzes, beispielsweise im Rückenteil, im Sitzteil und/oder in dem das Rückenteil und das Sitzteil verbindenden Bereich, der Rückseite des erfindungsgemäßen Sitzes mehr zweite Lagen Verbundwerkstoff vorliegen als erste Lagen in dem entsprechenden Bereich der Vorderseite. Beispielsweise ist es besonders bevorzugt, wenn in dem das Rückenteil und das Sitzteil verbindenden Bereich auf der Rückseite mehr zweite Lagen Verbundwerkstoff vorliegen als in dem entsprechenden Bereich der Vorderseite erste Lagen Verbundwerkstoff.

Im Rahmen der vorliegenden Erfindung bedeutet "mehr", dass auf einer Seite des Sitzes mindestens eine Lage mehr vorhanden ist als auf der gegenüberliegenden Seite.

Eine besonders bevorzugte Ausführungsform der vorliegenden Erfindung betrifft daher den erfindungsgemäßen Sitz, wobei in dem verbindenden Bereich auf einer Seite, bevorzugt auf der Rückseite, mindestens eine Lage Verbundwerkstoff enthaltend Fasern mehr vorliegt als auf der anderen Seite, bevorzugt der Vorderseite.

Weiter bevorzugt liegen auf der Rückseite des erfindungsgemäßen Sitzes 3 bis 30, besonders bevorzugt 5 bis 15, insbesondere bevorzugt 2 bis 8, ganz besonders bevorzugt 3 bis 5, zweite Lagen Verbundwerkstoff vor.

Auf der Vorderseite des erfindungsgemäßen Sitzes liegen bevorzugt 1 bis 10, besonders bevorzugt 1 bis 7, insbesondere bevorzugt 3 bis 5 oder 1 bis 3, erste Lagen Verbundwerkstoff vor.

Weiter bevorzugt liegen auf der Rückseite des erfindungsgemäßen Sitzes 3 bis 30, besonders bevorzugt 5 bis 15, insbesondere bevorzugt 2 bis 8, ganz besonders bevorzugt 3 bis 5, zweite Lagen Verbundwerkstoff vor, während auf der Vorderseite des erfindungsgemäßen Sitzes bevorzugt 1 bis 10, besonders bevorzugt 1 bis 7, insbesondere bevorzugt 3 bis 5 oder 1 bis 3, erste Lagen Verbundwerkstoff vorliegen, wobei auf der Rückseite jeweils mindestens eine zweite Lage mehr vorliegen als erste Lagen auf der Vorderseite.

Weiter bevorzugt liegen in bestimmten Bereichen der Rückseite, beispielsweise dem Rückenteil, dem Sitzteil und/oder dem das Rückenteil und das Sitzteil verbindenden Bereich, insbesondere in dem das Rückenteil und das Sitzteil verbindenden Bereich, des erfindungsgemäßen Sitzes 3 bis 20, bevorzugt 5 bis 15, zweite Lagen Verbundwerkstoff vor, während auf der Vorderseite des entsprechenden Bereichs des erfindungsgemäßen Sitzes 1 bis 10, bevorzugt 3 bis 10, erste Lagen Verbundwerkstoff vorliegen, wobei auf der Rückseite jeweils mindestens eine zweite Lage mehr vorliegen als erste Lagen auf der Vorderseite.

Weiter bevorzugt liegen in bestimmten Bereichen einer Seite, d.h. entweder der Rückseite oder der Vorderseite, beispielsweise dem Rückenteil, dem Sitzteil und/oder dem das Rückenteil und das Sitzteil verbindenden Bereich, insbesondere in dem das Rückenteil und das Sitzteil verbindenden Bereich, mehr Lagen Verbundwerkstoff vor als in den jeweils anderen Bereichen der gleichen Seite. Beispielsweise liegen in einem der genannten Bereiche einer Seites des Sitzes des erfindungsgemäßen Sitzes 3 bis 20, bevorzugt 5 bis 15, Lagen Verbundwerkstoff vor, während in den anderen Bereichen der gleichen Seite des Sitzes 1 bis 10, bevorzugt 3 bis 5, Lagen Verbundwerkstoff vorliegen, wobei in dem erstgenannten Bereich jeweils mindestens eine Lage mehr vorliegt als Lagen in den anderen Bereichen.

Besonders bevorzugt liegen in dem das Rückenteil und das Sitzteil verbindenden Bereich der Vorderseite des erfindungsgemäßen Sitzes jeweils mehr erste Lagen Verbundwerkstoff vor als in den anderen Bereichen, d.h. dem Sitzteil oder dem Rückenteil, der Vorderseite zweite Lagen.

Weiter bevorzugt liegen in dem das Rückenteil und das Sitzteil verbindenden Bereich der Rückseite des erfindungsgemäßen Sitzes jeweils mehr zweite Lagen Verbundwerkstoff vor als in den anderen Bereichen, d.h. dem Sitzteil oder dem Rückenteil, der Rückseite.

Liegen in dem erfindungsgemäßen Sitz mehr als eine Lage Verbundwerkstoff vor, so ist es möglich, dass die vorhandenen Lagen so angeordnet sind, dass die darin vorhandenen Endlosfasern parallel verlaufen, d.h. der Winkel zwischen Endlosfasern aus zwei übereinander liegenden Lagen beträgt im Wesentlichen 0°.

Des Weitern ist es möglich und bevorzugt, dass, falls mehr als eine Lage Verbundwerkstoff vorliegt, die vorhandenen Lagen so angeordnet sind, dass die darin vorhandenen Endlosfasern nicht parallel verlaufen, d.h. der Winkel zwischen Endlosfasern aus zwei entsprechenden verschiedenen Lagen beträgt im Wesentlichen nicht 0°.

Weiter bevorzugt ist es, wenn in dem erfindungsgemäßen Sitz jeweils mehr als eine erste oder mehr als eine zweite Lage Verbundwerkstoff übereinander vorliegen, und die Endlosfasern in benachbarten Lagen zueinander einen Winkel von 30° bis 130° aufweisen.

Beispielsweise können die Endlosfasern in benachbarten Lagen und/oder in der mindestens einen ersten Lage und in der mindestens einen zweiten Lage an verschiedenen Bauteilen des erfindungsgemäßen Sitzes einen Winkel von 30°, 40°, 45°, 50°, 60°, 70°, 80°, 90°, 100°, 110°, 120° oder 130° zueinander aufweisen. Dabei kann die Orientierung in jedem Fall um ±5°, bevorzugt um ±3°, besonders bevorzugt um ±1° von den genannten Richtwerten abweichen.

Besonders bevorzugt werden liegen in dem erfindungsgemäßen Sitz mehrere erste Lagen oder mehrere zweite Lagen vor, wobei die unidirektional orientierten Endlosfasern entsprechender benachbarter Lagen bevorzugt einen Winkel von 60 bis 120°, bevorzugt 80 bis 100°, beispielsweise 80°, 90° oder 100°, zueinander bilden.

Erfindungsgemäß weiter bevorzugt sind die unidirektional orientierten Endlosfasern in der mindestens einen ersten Lage und/oder in der mindestens einen zweiten Lage und/oder in verschiedenen Teilen des erfindungsgemäßen Sitzes, d.h. dem Sitzteil, dem Rückenteil und/oder dem das Sitzteil und das Rückenteil verbindenden Bereich, parallel zueinander oder einem Winkel von 30° bis 130° zueinander angeordnet sind, wobei die einzelnen Winkel unterschiedlich sein können, bevorzugt sind, d.h. sich beispielsweise um 5° bis 120° unterscheiden.

Erfindungsgemäß bevorzugt erstreckt sich eine unterschiedliche Orientierung der unidirektional orientierten Endlosfasern zueinander nur über Teile der Vorderseite und/oder Rückseite. Weiterhin bevorzugt erstreckt sich eine unterschiedliche Anzahl der ersten Lagen und der zweiten lagen nur über Teile der Vorderseite und/oder Rückseite.

Durch diese bevorzugten und besonders bevorzugten Ausführungsformen wird erfindungsgemäß eine erhöhte Stabilität des erfindungsgemäßen Sitzes in bestimmten, besonders beanspruchten, Bereichen gewährleistet.

Die vorliegende Erfindung betrifft daher auch den erfindungsgemäßen Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff,
wobei es sich bei den Fasern jeweils um unidirektional orientierte Endlosfasern handelt und die unidirektional orientierten Endlosfasern in der mindestens einen ersten Lage und/oder in der mindestens einen zweiten Lage und/oder in verschiedenen Teilen des erfindungsgemäßen Sitzes parallel zueinander oder einem Winkel von 30° bis 130° zueinander angeordnet sind, wobei die einzelnen Winkel unterschiedlich sein können, bevorzugt sind, d.h. sich beispielsweise um 5° bis 120° unterscheiden.

Weiter bevorzugt betrifft die vorliegende Erfindung den erfindungsgemäßen Sitz für ein Fahrzeug, bevorzugt für ein Landfahrzeug, für ein Wasserfahrzeug und/oder für ein Luftfahrzeug, umfassend mindestens ein mehrschichtiges Strukturbauteil umfassend mindestens eine erste und mindestens eine zweite Lage Verbundwerkstoff jeweils enthaltend Fasern, welche in einem thermoplastischen Kunststoff eingebettet sind, und eine dazwischen angeordnete Schicht aus mindestens einem geschäumten thermoplastischen Kunststoff, wobei es sich bei den Fasern jeweils um unidirektional orientierte Endlosfasern handelt wobei auf der Vorderseite und der Rückseite des erfindungsgemäßen Sitzes und/oder in verschiedenen Bereichen des Sitzes, beispielsweise Rückenteil, Sitzteil und dem das Rückenteil und das Sitzteil verbindenden Bereich, nicht gleich viele erste und zweite Lagen Verbundwerkstoff vorliegen
und/oder
die unidirektional orientierten Endlosfasern in der mindestens einen ersten Lage und/oder in der mindestens einen zweiten Lage und/oder in verschiedenen Teilen des erfindungsgemäßen Sitzes parallel zueinander oder in einem Winkel von 30° bis 130° zueinander angeordnet sind, wobei die einzelnen Winkel unterschiedlich sein können, bevorzugt sind, d.h. sich beispielsweise um 5° bis 120° unterscheiden.

Liegen erfindungsgemäß mehr als eine erste Lage oder mehr als eine zweite Lage vor, so können die jeweiligen Lagen im Wesentlichen gleich oder unterschiedlich, bevorzugt im Wesentlichen gleich, aufgebaut sein.

Unter einem im Wesentlichen gleichen Aufbau der entsprechenden Lagen Verbundwerkstoff wird im Rahmen der Erfindung verstanden, dass mindestens ein Merkmal aus der Gruppe chemische Zusammensetzung, Faservolumengehalt und Schichtdicke gleich ist. Unter chemischer Zusammensetzung werden erfindungsgemäß die chemische Zusammensetzung der Kunststoffmatrix des Verbundwerkstoffs, die chemische Zusammensetzung der Endlosfasern und/oder die Zusammensetzung der Faserschlichte verstanden.

Das in dem erfindungsgemäßen Sitz vorhandene mindestens eine mehrschichtige Strukturbauteil umfasst zwischen der mindestens einen ersten und der mindestens einen zweiten Lage Verbundwerkstoff eine Schicht aus mindestens einem geschäumten thermoplastischen Kunststoff.

Im Grunde kann erfindungsgemäß jeder dem Fachmann bekannte geschäumte thermoplastische Kunststoff eingesetzt werden.

In einer bevorzugten Ausführungsform ist der in dem erfindungsgemäßen Sitz vorliegende geschäumte thermoplastische Kunststoff ein solcher, welcher nicht erst zwischen der ersten Lage Verbundwerkstoff und der zweiten Lage Verbundwerkstoff aus entsprechenden Vorgängerverbindungen gebildet wird und aufschäumt. Es ist erfindungsgemäß bevorzugt, dass ein vollständig aufgeschäumter thermoplastischer Kunststoff bei der Herstellung des erfindungsgemäßen Sitzes zwischen die erste Lage Verbundwerkstoff und die zweite Lage Verbundwerkstoff eingebracht und mit den Lagen verbunden wird.

Der erfindungsgemäß vorhandene geschäumte thermoplastische Kunststoff ist bevorzugt ausgewählt aus der Gruppe bestehend aus Polycarbonat, Polyamid, Polyester, Polylactid, Polyether, thermoplastischem Polyurethan, Polyacetal, Fluorpolymer, Polyethersulfon, Polyolefin, insbesondere Polyethylen und Polypropylen, Polyimid, Polyacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadien-Styrolblockcopolymere, Polyvinylchlorid, Polyethylenterephthalat und Mischungen davon.

Bevorzugt liegt erfindungsgemäß als geschäumter thermoplastischer Kunststoff ein geschäumter auf Homopolycarbonat und/oder Copolycarbonat basierender Kunststoff vor.

Dadurch, dass als geschäumter thermoplastischer Kunststoff bevorzugt ein auf Homopolycarbonat und/oder Copolycarbonat basierender Kunststoff eingesetzt wird, und die Fasern, bevorzugt die Endlosfasern, in dem Verbundwerkstoff bevorzugt ebenfalls in einem auf Homopolycarbonat und/oder Copolycarbonat basierenden Kunststoff eingebettet sind, gelingt es erfindungsgemäß, ein Strukturteil bereitzustellen, welches besonders günstig und effizient zu recyclen ist.

Die Dichte des vorliegenden geschäumten thermoplastischen Kunststoffs, insbesondere des geschäumten auf Homopolycarbonat und/oder Copolycarbonat basierenden Kunststoffs, beträgt im Allgemeinen 0,03 bis 0,7 g/cm³, bevorzugt 0,15 bis 0,5 g/cm³, besonders bevorzugt 0,2 bis 0,25 g/cm³.

Für die erfindungsgemäß eingesetzten Partikel wird als ein auf Polycarbonat basierender Kunststoff im Rahmen der vorliegenden Erfindung ein Kunststoff verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-%, Polycarbonat enthält. Anders ausgedrückt kann ein auf Polycarbonat basierender Kunststoff im Rahmen der vorliegenden Erfindung höchstens 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-%, einen oder mehrere von Polycarbonat verschiedene Kunststoffe als Blendpartner enthalten.

Gemäß einer besonderen Ausführungsform besteht der für die geschäumten Partikel eingesetzte auf Polycarbonat basierende Kunststoff im Wesentlichen, insbesondere zu 100 Gew.-% aus Polycarbonat.

Gemäß einer besonderen Ausführungsform der Erfindung besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen.

Einzelheiten der Herstellung von Polycarbonaten sind dem Fachmann seit mindestens etwa 40 Jahren gut bekannt. Entsprechende Literaturstellen werden weiter oben genannt.

Die Herstellung von Polycarbonaten ist dem Fachmann an sich bekannt und ist ebenfalls weiter oben schon beschrieben.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3`-Bis-(4-hydroxyphenyl)-phthalimid, 2-Alkyl-3,3`-Bis-(4-hydroxyphenyl)-phthalimide, wie 2-Butyl-3,3`-Bis-(4-hydroxyphenyl)-phthalimide, 2-Propyl-3,3`-Bis-(4-hydroxyphenyl)-phthalimide, 2-Ethyl-3,3`-Bis-(4-hydroxyphenyl)-phthalimide oder 2-Methyl-3,3 '-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5- dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 bis 25 Gew.-%, vorzugsweise 2,5 bis 25 Gew.-%, besonders bevorzugt 2,5 bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3,419,634, US-PS 3,189,662, EP 0 122 535, US 5,227,449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polya-ryletherketon, Styrolpolymerisate, insbesondere Polystyrol, Styrolcopolymere, insbesondere Styrolacrylnitrilcopolymer, Acrylnitrilbutadien-styrolblockcopolymere und Polyvinylchlorid einsetzen.

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive enthalten.

Erfindungsgemäß geeignete Additive sind beispielsweise ausgewählt aus der Gruppe bestehend aus Flammschutzmitteln, Antitropfmitteln, Thermostabilisatoren, Entformungsmitteln, Antioxidantien, UV-Absorbern, IR-Absorbern, Antistatika, optischen Aufhellern, Lichtstreumitteln, Farbmitteln wie Pigmente, auch anorganische Pigmente, Ruß und/oder Farbstoffe, anorganischen Füllstoffen und Mischungen davon. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102 oder EP-A 0 500 496 beschrieben.

Erfindungsgemäß bevorzugt in den geschäumten Partikeln eingesetzte auf Homopolycarbonat und/oder Copolycarbonat basierende Kunststoffe weisen im Allgemeinen eine Schmelzviskosität auf, die eine gute Verarbeitbarkeit gemäß der vorliegenden Erfindung gewährleistet. In einer bevorzugten Ausführungsform weisen die eingesetzten auf Homopolycarbonat und/oder Copolycarbonat basierenden Kunststoffe eine Schmelzviskosität von 100 bis 2000 Pa*s, weiter bevorzugt 130 bis 1300 Pa*s, auf. Die Bestimmung der Schmelzviskosität erfolgt mit dem Hochdruck Kapillarrheometer nach ISO 11443 aus 04-2014.

Erfindungsgemäß bevorzugt eingesetzte auf Homopolycarbonat und/oder Copolycarbonat basierende Kunststoffe weisen im Allgemeinen ein Molekulargewicht auf, das eine gute Verarbeitbarkeit gemäß der vorliegenden Erfindung gewährleistet. In einer bevorzugten Ausführungsform weisen die eingesetzten auf Homopolycarbonat und/oder Copolycarbonat basierenden Kunststoffe ein Molekulargewicht von 24000 bis 33000 g/mol, weiter bevorzugt von 26000 bis 31000 g/mol, auf. Die Bestimmung des Molekulargewichts erfolgt GPC Analytik DIN EN ISO/IEC 17025 aus 03-2018.

In einer bevorzugten Ausführungsform betrifft die vorliegende Erfindung den erfindungsgemäßen Sitz, wobei auf der Außenseite der ersten und/oder der zweiten Lage Verbundwerkstoff wenigstens eine schützende, dekorative, die Haptik verbessernde und/oder den Sitzkomfort verbessernde Beschichtung vorliegt.

Entsprechende Beschichtungen sind dem Fachmann an sich bekannt. Eine schützende Beschichtung ist beispielsweise ausgewählt aus Klarlack und/oder Hardcoatlack. Eine dekorative Beschichtung ist beispielsweise ausgewählt aus dem Fachmann bekannten Kunstledern. Eine die Haptik verbessernde Beschichtung ist beispielsweise ausgewählt aus Softtouchlacken. Eine den Sitzkomfort verbessernde Beschichtung wird beispielsweise dadurch verwirklicht, dass eine Schicht aus einem dem Fachmann bekannten thermoplastischen Polyurethan aufgebracht wird. Erfindungsgemäß ist es möglich und bevorzugt, dass entsprechende Beschichtungen nicht auf der gesamten Fläche des erfindungsgemäßen Sitzes aufgebracht werden, sondern nur teilweise. Vorteilhaft an dieser Ausführungsform ist, dass durch entsprechende Beschichtungen die oben genannten Anforderungen an einen Sitz für ein Fahrzeug bei geringeren Kosten und Aufwand erfüllt werden.

Die vorliegende Erfindung betrifft auch das Verfahren zur Herstellung eines erfindungsgemäßen Sitzes, mindestens umfassend die folgenden Schritte:
(A) Bereitstellen mindestens einer ersten und mindestens einer zweiten Lage Verbundwerkstoff jeweils enthaltend Fasern, welche jeweils in einem thermoplastischen Kunststoff eingebettet sind,
(B) Thermoverformen der mindestens einen ersten Lage Verbundwerkstoff zu einer unteren Sitzschale,
(C) Thermoverformen der mindestens einen zweiten Lage Verbundwerkstoff zu einer oberen Sitzschale,
(D) Anordnen der unteren Sitzschale und der oberen Sitzschale in einem Werkzeug, so dass zwischen den beiden Sitzschalen ein Spalt ausgebildet wird,
(E) Einbringen von aufgeschäumten Partikeln aus einem thermoplastischen Kunststoff in den Spalt, und
(F) Verpressen der beiden Sitzschalen und der aufgeschäumten Partikel, um den Sitz zu erhalten.
Die einzelnen Schritte des erfindungsgemäßen Verfahrens werden im Folgenden detailliert beschrieben:
Schritt (A) des erfindungsgemäßen Verfahrens umfasst das Bereitstellen mindestens einer ersten und mindestens einer zweiten Lage Verbundwerkstoff jeweils enthaltend Fasern, welche jeweils in einem thermoplastischen Kunststoff eingebettet sind.

Das bezüglich der mindestens einen ersten Lage und der mindestens einen zweiten Lage bereits Gesagte gilt für das erfindungsgemäße Verfahren, insbesondere Schritt (A), entsprechend.

Bevorzugt werden in Schritt mindestens einen erste Lage Verbundwerkstoff und mindestens eine zweite Lage Verbundwerkstoff in entsprechenden Maßen bereitgestellt. Die entsprechenden Maße ergeben sich aus den Maßen des herzustellenden Sitzes zuzüglich weiterem Material, welches benötigt wird, um die in Schritt bevorzugt eben bzw. im Wesentlichen eben bereitgestellten Lagen in den Schritten (B) und (C) in eine dreidimensionale Form zu bringen. Des Weiteren wird an den Rändern der bereitgestellten Lagen bevorzugt weiteres Material benötigt, welches nach dem Thermoformen in den Schritten (B) und (C) an den Rändern der hergestellten Sitzschalen abgetrennt, bevorzugt abgeschnitten, wird. Erfindungsgemäß werden an den eingesetzten Lagen Verbundwerkstoff an den Rändern beispielsweise 5 bis 10 cm mehr Material vorgesehen.

Die erfindungsgemäß in Schritt (A) bereitgestellte mindestens eine erste Lage und die mindestens eine zweite Lage weisen jeweils im Allgemeinen eine Dicke von 30 bis 1000 µm, bevorzugt 50 bis 500 µm, besonders bevorzugt 175 bis 300 µm, auf. Erfindungsgemäß können die mindestens eine erste Lage und die mindestens eine zweite Lage gleich dick oder unterschiedlich dick sein.

In einer bevorzugten Ausführungsform der vorliegenden Erfindung werden mehr als eine erste Lage Verbundwerkstoff und/oder mehr als eine zweite Lage Verbundwerkstoff verwendet. In dieser Ausführungsform beinhaltet Schritt (A) auch das Bereitstellen einer entsprechenden Anzahl an Lagen.

Für den erfindungsgemäßen Fall, dass mehr als eine erste Lage Verbundwerkstoff vorliegt und die einzelnen ersten Lagen so angeordnet sind, dass die darin enthaltenen Fasern, insbesondere Endlosfasern, in benachbarten ersten Lagen parallel zueinander ausgerichtet sind, so werden in Schritt (A) die einzelnen ersten Lagen bevorzugt so zu einander ausgerichtet, dass die Fasern, insbesondere die Endlosfasern, in benachbarten zweiten Lagen parallel zueinander liegen. Wird erfindungsgemäß mehr als eine Lage Verbundwerkstoff eingesetzt, so können die einzelnen Lagen durch dem Fachmann bekannte Verfahren miteinander, bevorzugt punktuell, verbunden werden, beispielsweise durch Vibrationsschweißen oder Heizbalken.

Für den erfindungsgemäßen Fall, dass mehr als eine zweite Lage Verbundwerkstoff vorliegt und die einzelnen zweiten Lagen so angeordnet sind, dass die darin enthaltenen Fasern, insbesondere Endlosfasern, in benachbarten zweiten Lagen parallel zueinander ausgerichtet sind, so werden in Schritt (A) die einzelnen zweiten Lagen bevorzugt so zu einander ausgerichtet, dass die Fasern, insbesondere die Endlosfasern, in benachbarten zweiten Lagen parallel zueinander liegen.

Für den erfindungsgemäßen Fall, dass mehr als eine erste Lage Verbundwerkstoff vorliegt und die einzelnen ersten Lagen so angeordnet sind, dass die darin enthaltenen Fasern, insbesondere Endlosfasern, in benachbarten ersten Lagen nicht parallel zueinander ausgerichtet sind, sondern einen bestimmten Winkel miteinander bilden, beispielsweise einen von Winkel von 30° bis 130°, beispielsweise 30°, 40°, 50°, 60°, 70°, 80°, 90°, 100°, 110°, 120° oder 130°, bevorzugt 60 bis 120°, besonders bevorzugt 80 bis 100°, wobei die Orientierung in jedem Fall um ±5°, bevorzugt um ±3°, besonders bevorzugt um ±1° von den genannten Richtwerten abweichen kann, so werden in Schritt (A) die einzelnen ersten Lagen bevorzugt so zu einander ausgerichtet, dass die Fasern, insbesondere die Endlosfasern, in benachbarten ersten Lagen einen entsprechenden Winkel bilden. Beispielsweise können drei erste Lagen eingesetzt werden, wobei die Fasern, insbesondere die Endlosfasern, in benachbarten Lagen jeweils einen Winkel von 90° bilden. Eine solche Lagenabfolge würde "90/0/90" genannt.

Für den erfindungsgemäßen Fall, dass mehr als eine zweite Lage Verbundwerkstoff vorliegt und die einzelnen zweiten Lagen so angeordnet sind, dass die darin enthaltenen Fasern, insbesondere Endlosfasern, in benachbarten zweiten Lagen nicht parallel zueinander ausgerichtet sind, sondern einen bestimmten Winkel miteinander bilden, beispielsweise einen von Winkel von 30° bis 130°, beispielsweise 30°, 40°, 50°, 60°, 70°, 80°, 90°, 100°, 110°, 120° oder 130°, bevorzugt 60 bis 120°, besonders bevorzugt 80 bis 100°, wobei die Orientierung in jedem Fall um ±5°, bevorzugt um ±3°, besonders bevorzugt um ±1° von den genannten Richtwerten abweichen kann, so werden in Schritt (A) die einzelnen zweiten Lagen bevorzugt so zu einander ausgerichtet, dass die Fasern, insbesondere die Endlosfasern, in benachbarten zweiten Lagen einen entsprechenden Winkel bilden. Beispielsweise können drei zweite Lagen eingesetzt werden, wobei die Fasern, insbesondere die Endlosfasern, in benachbarten Lagen jeweils einen Winkel von 90° bilden. Eine solche Lagenabfolge würde "90/0/90" genannt.

Erfindungsgemäß können nach Schritt (A) des erfindungsgemäßen Verfahrens alle dem Fachmann bekannten weiteren Verfahrensschritte erfolgen, bevor die mindestens eine erste Lage Verbundwerkstoff in Schritt (B) oder die mindestens eine zweite Lage Verbundwerkstoff in Schritt (C) überführt werden. Bevorzugt erfolgen zwischen den Schritten (A) und (B) bzw. (C) keine weiteren Verfahrensschritte.

Schritt (B) des erfindungsgemäßen Verfahrens umfasst das Thermoverformen der mindestens einen ersten Lage Verbundwerkstoff zu einer unteren Sitzschale.

Das Thermoverformen von entsprechenden Lagen Verbundwerkstoff enthaltend Faser, insbesondere Endlosfasern, welche in einem thermoplastischen Kunststoff eingebettet sind, ist dem Fachmann an sich bekannt.

Das Thermoverformen gemäß Schritt (B) des erfindungsgemäßen Verfahrens erfolgt bevorzugt in dem Fachmann an sich bekannten Vorrichtungen, beispielsweise in beheizten Stahlwerkzeugen.

Das Thermoverformen gemäß Schritt (B) des erfindungsgemäßen Verfahrens erfolgt im Allgemeinen bei einer Temperatur von 180 bis 350 °C, bevorzugt 280 bis 320 °C, besonders bevorzugt 290 bis 300 °C.

Das Thermoverformen gemäß Schritt (B) des erfindungsgemäßen Verfahrens erfolgt im Allgemeinen bei einem Druck von 1 bis 200 bar(a), bevorzugt 10 bis 150 bar(a), besonders bevorzugt 15 bis 120 bar(a).

Das Thermoverformen gemäß Schritt (B) des erfindungsgemäßen Verfahrens erfolgt im Allgemeinen für eine Zeit von 60 bis 180 s, bevorzugt 80 bis 150 s, besonders bevorzugt 90 bis 120 s.

Nach Schritt (B) des erfindungsgemäßen Verfahrens wird die untere Sitzschale erhalten, wobei durch das Verfahren des Thermoverformens bedingt gegebenenfalls an den Rändern noch Materialüberstände vorliegen. Diese werden in einer bevorzugten Ausführungsform mit dem Fachmann bekannten Verfahren vor Überführen der unteren Sitzschale in Schritt (D) abgetrennt, beispielsweise durch Fräsen oder Ausstanzen.

Erfindungsgemäß können nach Schritt (B) des erfindungsgemäßen Verfahrens alle dem Fachmann bekannten weiteren Verfahrensschritte mit der erhaltenen unteren Sitzschale erfolgen, bevor diese in Schritt (D) überführt wird, beispielsweise das oben beschriebene Abtrennen von gegebenenfalls vorhandenen Materialüberständen und/oder Reinigen des Werkstücks.

Schritt (C) des erfindungsgemäßen Verfahrens umfasst das Thermoverformen der mindestens einen zweiten Lage Verbundwerkstoff zu einer oberen Sitzschale.

Das Thermoverformen gemäß Schritt (C) des erfindungsgemäßen Verfahrens erfolgt bevorzugt in dem Fachmann an sich bekannten Vorrichtungen, beispielsweise beheizte Stahlformen.

Das Thermoverformen gemäß Schritt (C) des erfindungsgemäßen Verfahrens erfolgt im Allgemeinen bei einer Temperatur von 180 bis 350 °C, bevorzugt 280 bis 320 °C, besonders bevorzugt 290 bis 300 °C.

Das Thermoverformen gemäß Schritt (C) des erfindungsgemäßen Verfahrens erfolgt im Allgemeinen bei einem Druck von 1 bis 200 bar(a), bevorzugt 10 bis 150 bar(a), besonders bevorzugt 15 bis 120 bar(a).

Das Thermoverformen gemäß Schritt (C) des erfindungsgemäßen Verfahrens erfolgt im Allgemeinen für eine Zeit von 60 bis 180 s, bevorzugt 80 bis 150 s, besonders bevorzugt 90 bis 120 s.

Nach Schritt (C) des erfindungsgemäßen Verfahrens wird die obere Sitzschale erhalten, wobei durch das Verfahren des Thermoverformens bedingt gegebenenfalls an den Rändern noch Materialüberstände vorliegen. Diese werden in einer bevorzugten Ausführungsform mit dem Fachmann bekannten Verfahren vor Überführen der oberen Sitzschale in Schritt (D) abgetrennt, beispielsweise durch Fräsen oder Ausstanzen.

Erfindungsgemäß können nach Schritt (C) des erfindungsgemäßen Verfahrens alle dem Fachmann bekannten weiteren Verfahrensschritte mit der erhaltenen oberen Sitzschale erfolgen, bevor diese in Schritt (D) überführt wird, beispielsweise das oben beschriebene Abtrennen von gegebenenfalls vorhandenen Materialüberständen und/oder Reinigen des Werkstücks

Schritt (D) des erfindungsgemäßen Verfahrens umfasst das Anordnen der unteren Sitzschale und der oberen Sitzschale in einem Werkzeug, so dass zwischen den beiden Sitzschalen ein Spalt ausgebildet wird.

Im Allgemeinen kann Schritt (D) des erfindungsgemäßen Verfahrens durch alle dem Fachmann bekannten Methoden erfolgen, beispielsweise Halterung mittels Vakuum, Elektrostatik oder mechanische Verkrallung. In einer bevorzugten Ausführungsform wird zunächst die untere Sitzschale in ein entsprechendes Werkzeug, insbesondere eine Presse, beispielsweise eine Horizontal- oder Vertikalpresse, in der die nachfolgenden Schritte durchgeführt werden, eingelegt. Bevorzugt wird zwischen der Innenseite des Werkzeugs und der Außenseite der unteren Sitzschale eine Schicht eingelegt oder eingebracht, die das Anhaften der unteren Sitzschale an dem Werkzeug verhindert, beispielsweise Teflon.

In einem weiteren Schritt wird dann bevorzugt die obere Sitzschale so über der unteren Sitzschale positioniert, dass zwischen den beiden Sitzschalen ein entsprechender Spalt ausgebildet wird. In einer bevorzugten Ausführungsform ist dieser Spalt so ausgebildet, wie die zwischen den beiden Schichten angeordnete Schicht aus mindestens einem geschäumten thermoplastischen Kunststoff im fertigen Produkt aussehen wird.

In dem erfindungsgemäßen Fall, dass im fertigen Sitz einen gleichmäßig Dicke der Schicht aus mindestens einem geschäumten thermoplastischen Kunststoff vorliegt, werden die untere Sitzschale und die obere Sitzschale so über einander angeordnet, dass sich ein entsprechender gleichmäßig dicker Spalt ausbildet.

In dem erfindungsgemäßen Fall, dass im fertigen Sitz eine nicht gleichmäßige Dicke der Schicht aus mindestens einem geschäumten thermoplastischen Kunststoff vorliegt, werden die untere Sitzschale und die obere Sitzschale so über einander angeordnet, dass sich ein entsprechender nicht gleichmäßig dicker Spalt ausbildet.

In einer bevorzugten Ausführungsform der vorliegenden Fälle ist die Dicke des Spaltes, der in Schritt (D) des erfindungsgemäßen Verfahrens ausgebildet wird größer als die resultierende Schicht aus mindestens einem geschäumten thermoplastischen Kunststoff im fertigen Produkt, da beispielsweise nach dem Einfüllen der Partikel in Schritt (E) des erfindungsgemäßen Verfahrens die beiden Sitzschalen weiter aufeinander zubewegt werden und/oder durch das Pressen in Schritt (F) des erfindungsgemäßen Verfahrens sich die Dicke des Spaltes noch weiter verringert.

Der Spalt, der in Schritt (D) des erfindungsgemäßen Verfahrens ausgebildet wird, ist beispielsweise um 5 bis 200%, bevorzugt 10 bis 100%, besonders bevorzugt 20 bis 50% dicker als die Schicht aus mindestens einem geschäumten thermoplastischen Kunststoff im fertigen erfindungsgemäßen Sitz.

Erfindungsgemäß können nach Schritt (D) des erfindungsgemäßen Verfahrens alle dem Fachmann bekannten weiteren Verfahrensschritte erfolgen, bevor Schritt (E) stattfindet, beispielsweise Plasmareinigung und/oder Plasmaaktivierung. Bevorzugt erfolgen zwischen den Schritten (D) und (E) keine weiteren Verfahrensschritte.

Schritt (E) des erfindungsgemäßen Verfahrens umfasst das Einbringen von aufgeschäumten Partikeln aus einem thermoplastischen Kunststoff in den Spalt.

Das Einbringen gemäß Schritt (E) des erfindungsgemäßen Verfahrens kann im Allgemeinen nach allen dem Fachmann bekannten Verfahren erfolgen. In einer bevorzugten Ausführungsform werden die aufgeschäumten Partikel aus einem thermoplastischen Kunststoff mittels Pressluft durch die Injektoren in die Kavität eingebracht. Dies erfolgt beispielsweise bei Umgebungstemperatur und einem Druck von 1 bis 10 bar(a).

Die aufgeschäumten Partikeln aus einem thermoplastischen Kunststoff, die in Schritt (E) des erfindungsgemäßen Verfahrens verwendet werden, weisen im Allgemeinen eine Dichte von 0,05 bis 0,6 g/cm³, bevorzugt 0,2 bis 0,25 g/cm³, auf.

Die aufgeschäumten Partikeln aus einem thermoplastischen Kunststoff, die in Schritt (E) des erfindungsgemäßen Verfahrens verwendet werden, weisen im Allgemeinen einen Durchmesser von 0,5 bis 8 mm, bevorzugt 0,8 bis 5 mm, besonders bevorzugt 1,0 bis 3,5 mm, auf.

Die aufgeschäumten Partikeln aus einem thermoplastischen Kunststoff, die in Schritt (E) des erfindungsgemäßen Verfahrens verwendet werden, können im Allgemeinen jedwede Form aufweisen, beispielsweise kugelförmig, unregelmäßig und/oder länglich, bevorzugt kugelförmig.

Der für die aufgeschäumten Partikel eingesetzte thermoplastische Kunststoff ist beispielsweise ausgewählt aus der Gruppe bestehend aus Homopolycarbonat, Copolycarbonat, Polyamid, Polyester, Polyethylenterephthalat, Polylactid, Polyether, thermoplastischem Polyurethan, Polyacetal, Fluorpolymer, Polyethersulfon, Polyolefin, insbesondere Polyethylen und Polypropylen, Polyimid, Polyacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadien-Styrolblockcopolymere, Polyvinylchlorid und Mischungen davon.

Bevorzugt liegt erfindungsgemäß in den aufgeschäumten Partikeln ein geschäumter auf Homopolycarbonat und/oder Copolycarbonat basierender Kunststoff vor.

Besonders bevorzugt werden in Schritt (F) des erfindungsgemäßen Verfahrens aufgeschäumte Partikel eingesetzt, enthaltend
a) eine Polymermatrix bestehend aus mindestens einem Homopolycarbonat und/oder Copolycarbonat,
b) gegebenenfalls weitere Additive, beispielsweise Flammschutzmittel, Farbpigmente, Treibmittel, z.B. Pentan, Cyclopentan, HFC.

Als Polymermatrix a) werden bevorzugt die oben bereits genannten thermoplastischen Kunststoffe eingesetzt, insbesondere die genannten auf einem Homopolycarbonat und/oder Copolycarbonat basierenden Kunststoffe.

Als Additive b) können beispielsweise Füllstoffe oder Talkum als Nukleierungshilfsmittel verwendet werden.

Die erfindungsgemäß eingesetzten Partikel weisen im Allgemeinen eine Schüttdichte von bis zu 600 g/I, bevorzugt im Bereich von 100 bis 400 g/I, besonders bevorzugt im Bereich von 150 bis 300 g/I auf. Bei Verwendung von Füllstoffen können in Abhängigkeit von der Art und Menge des Füllstoffes Schüttdichten im Bereich von größer als 600 g/I auftreten.

Verfahren zur Herstellung entsprechender aufgeschäumter Partikel aus einem thermoplastischen Kunststoff, insbesondere aus Polycarbonat, sind dem Fachmann an sich bekannt und beispielsweise beschrieben in WO 2012/020112 A1.

Erfindungsgemäß können nach Schritt (E) des erfindungsgemäßen Verfahrens alle dem Fachmann bekannten weiteren Verfahrensschritte erfolgen, bevor Schritt (F) durchgeführt wird, insbesondere Verringerung der Spaltdicke, beispielsweise durch Schließen des Werkzeugs.

Schritt (F) des erfindungsgemäßen Verfahrens umfasst das Verpressen der beiden Sitzschalen der aufgeschäumten Partikel, um den Sitz zu erhalten.

In einer bevorzugten Ausführungsform umfasst Schritt (F) des erfindungsgemäßen Verfahrens auch das variotheme Verschweißen der Sitzschale und der aufgeschäumten Partikel. Das variotherme Verfahren ist dem Fachmann an sich bekannt und beispielsweise beschrieben in dem entsprechenden Kapitel von "Spritzgießwerkzeuge Hanser Verlag Christian Hopmann, Georg Menges, Walter Michaeli, Paul Mohren, 7. Auflage, 2018, ISBN: 978-3-446-45192-6."

In einer weiteren bevorzugten Ausführungsform kann Schritt (F) des erfindungsgemäßen Verfahrens auch durch das dem Fachmann bekannte Atecarma-Verfahren erfolgen, siehe beispielsweise dazu EP 2 937 379 A1. Dabei werden die geschäumten Partikel mit einer wässrigen Emulsion eines Polyolefins, bevorzugt eines mit Chlor und Maleinsäureanhydrid modifizierten Polyolefins, funktionalisiert, diese funktionalisierten, geschäumten Partikel auf eine Temperatur unterhalb des Schmelzbereichs der Partikel erhitzt, wobei die Partikel miteinander verbunden werden, und anschließend abgekühlt.

Schritt (F) des erfindungsgemäßen Verfahrens beinhaltet bevorzugt, dass die beiden Werkzeugteile, die die untere bzw. die obere Sitzschale halten, so aufeinander zubewegt werden, dass zum einen ein entsprechender Druck erzeugt wird und zum anderen der mit Partikeln gefüllte Spalt zwischen der unteren Sitzschale und der oberen Sitzschale sich der Dicke der entsprechenden Schicht im erfindungsgemäßen Sitz entspricht.

Im Allgemeinen kann Schritt (F) des erfindungsgemäßen Verfahrens bei jeder dem Fachmann als geeignet erscheinenden Temperatur erfolgen, bevorzugt bei 160 bis 300 °C, besonders bevorzugt bei 200 bis 220 °C.

Im Allgemeinen kann Schritt (F) des erfindungsgemäßen Verfahrens bei jedem dem Fachmann als geeignet erscheinenden Druck erfolgen, bevorzugt bei 10 bis 200 bar(a), besonders bevorzugt bei 15 bis 100 bar(a).

Im Allgemeinen kann Schritt (F) des erfindungsgemäßen Verfahrens für jede dem Fachmann als geeignet erscheinende Zeit erfolgen, bevorzugt für 60 bis 300 s, besonders bevorzugt für 90 bis 180 s.

Es ist erfindungsgemäß bevorzugt, dass sich während des Pressvorgangs in Schritt (F) des erfindungsgemäßen Verfahrens die Dichte des im Spalt vorhandenen Materials im Wesentlichen nicht ändert. Insbesondere schäumen die in den Spalt eingefüllten bereits aufgeschäumten Partikel aus einem thermoplastischen Kunststoff bei der Herstellung des erfindungsgemäßen Sitzes nicht weiter auf.

Nach dem eigentlichen Pressvorgang in Schritt (F) des erfindungsgemäßen Verfahrens wird der hergestellte Sitz bevorzugt dem Werkzeug, insbesondere der Presse, entnommen. Es können sich noch weitere dem Fachmann bekannte Verfahrensschritte anschließen, beispielsweise Reinigen, Abtrennen von gegebenenfalls vorhandenen Materialrückständen.

Die vorliegende Erfindung betrifft auch die Verwendung des erfindungsgemäßen Sitzes in einem Fahrzeug, bevorzugt in einem Landfahrzeug, in einem Wasserfahrzeug und/oder in einem Luftfahrzeug.

Die Bezüglich des erfindungsgemäßen Sitzes bereits offenbarten Merkmale und bevorzugte Ausführungsformen gelten für die erfindungsgemäße Verwendung entsprechend.

### Bezugszeichenleiste:

- 1: mehrschichtiges Strukturteil
- 2: Sitzteil
- 3: Rückenteil
- 4: das Sitzteil (2) und das Rückenteil (3) verbindender Bereich
- 5: zweite Lage Verbundwerkstoff
- 6: erste Lage Verbundwerkstoff
- 7: Schicht aus mindestens einem geschäumten thermoplastischen Kunststoff
- 8: Rückseite, untere Sitzschale
- 9: Vorderseite, obere Sitzschale

### Zeichnungen:

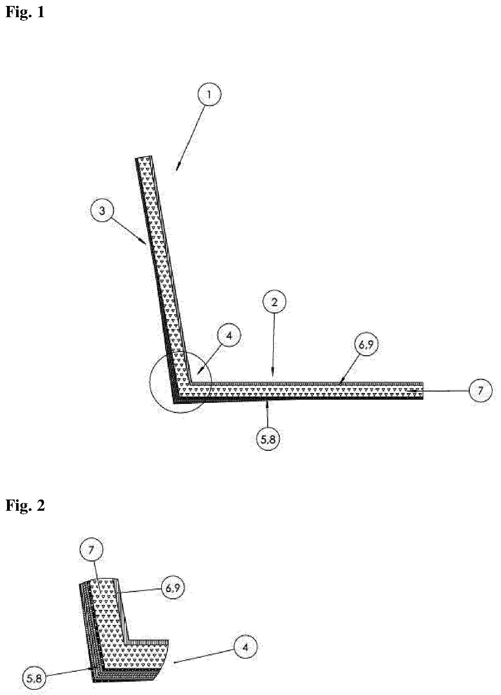

Figur 1 zeigt eine Seitenansicht des erfindungsgemäßen Sitzes bestehend aus einem mehrschichtigen Strukturteil (1). Das mehrschichtige Strukturteil (1) besteht aus einem Sitzteil (2), einem Rückenteil (3) und einem das Sitzteil (2) und das Rückenteil (3) verbindenden Bereich (4). Das mehrschichtige Strukturteil (1) weist eine zweite Lage Verbundwerkstoff (5) und eine erste Lage Verbundwerkstoff (6), jeweils enthaltend Endlosfasern, eingebettet in Polycarbonat, auf. Dazwischen liegt eine Schicht (7) aus einem geschäumten Polycarbonat vor.

Figur 2 zeigt eine weitere Seitenansicht des erfindungsgemäßen Sitzes. Auf der Rückseite (8) des Sitzes liegen mehrere Lagen Verbundwerkstoff vor. In dem das Sitzteil (2) und das Rückenteil (3) verbindenden Bereich (4) ist eine Vielzahl von Lagen Verbundwerkstoff (5) angeordnet, die sich aber nicht über die gesamte Rückseite (8) des angrenzenden Rückenteils (3) bzw. nicht über die gesamte Rückseite (8) des angrenzenden Sitzteils (2) erstrecken. Auf der Vorderseite (9) liegt lediglich eine Lage Verbundwerkstoff (6) vor, die sich über die gesamte Vorderseite (9) des Rückenteils (8) und über die gesamte Vorderseite (9) des Sitzteils (2) erstreckt.

### Beispiele:

Um zu zeigen, dass der erfindungsgemäße Sitz Vorteile bezüglich der mechanischen Belastbarkeit, insbesondere bezüglich des Elastizitätsmoduls bei Zug und bei Biegung (Zugmodul bzw. Biegemodul), aufweist, wurden die folgenden Beispiele durch dem Fachmann bekannte Verfahren berechnet:
1. Experimentelle Ermittlung der mechanischen Eigenschaften einer einzelnen Lage enthaltend unidirektional orientierte Endlosfasern.

Es wurden die folgenden Werte ermittelt:
Zugmodul in Faserrichtung: 96.250 MPa, entspricht ca. 96 GPa, gemssen nach ISO 527-5 2010-01
Zugmodul quer zur Faserrichtung: 5.950 MPa, entspricht ca. 6 GPa, gemessen nach ISO 527-5 2010-01
Querkontraktionszahl: 0,29, gemessen nach ISO 527-5 2010-01
Schubmodul: 2.550 MPa, gemessen nach ISO 14129 1998-02
Dicke der Einzelschicht: 0,175 mm

2. Theoretische Berechnung des Zugmoduls und Biegemoduls für unterschiedliche Lagenaufbauten auf Grundlage der experimentellen Werte aus 1. mit Hilfe der Laminattheorie in 0°-Richtung und 90°-Richtung

3. Berechnung der Biegesteifigkeit durch folgende Formel E*I/b (normiert auf die Breite) für einen rechteckigen Querschnitt
E ergibt sich aus Tabelle 1, in dem Fall Biegemodul
I Flächenträgheitsmoment, für einen rechteckigen Querschnitt gilt: I = (b*h³)/12
b Breite des Querschnitts
h Höhe des Querschnitts

In Tabelle 1 sind die unter Nr. 2 und 3 ermittelten Werte angegeben.

**Tabelle 1:**

| Nr. | Orientierung der Fasern in den Lagen [°] | Dicke [mm] | Zugmodul [GPa] | | Biegemodul [GPa] | | Biegesteifigkeit/b [Nmm] | |
|---|---|---|---|---|---|---|---|---|
| | | | 0° | 90° | 0° | 90° | 0° | 90° |
| 1 | 0/0/0/0 | 0,7 | 96 | 6 | 96 | 6 | 2,7 | 0,2 |
| 2 | 0/90/90/0 | 0,7 | 51 | 51 | 85 | 17 | 2,4 | 0,5 |
| 3 | 0/0/0/0/0/0/0/0 | 1,4 | 96 | 6 | 96 | 6 | 22,0 | 1,4 |
| 4 | 0/90/90/0/0/90/90/0 | 1,4 | 51 | 51 | 60 | 43 | 13,7 | 9,8 |
| 5 | 45/-45/0/90/90/0/-45/45 | 1,4 | 36 | 36 | 36 | 27 | 8,2 | 6,2 |
| 6 | 45/0/-45/90/90/-45/0/90 | 1,4 | 36 | 36 | 49 | 23 | 11,2 | 5,3 |
| 7 | 30/-30/0/90/90/0/-30/30 | 1,4 | 51 | 30 | 60 | 13 | 13,7 | 3,0 |

## Patentansprüche

1. Verfahren zur Herstellung eines Sitzes, mindestens umfassend die folgenden Schritte:
(A) Bereitstellen mindestens einer ersten und mindestens einer zweiten Lage Verbundwerkstoff (6, 5) jeweils enthaltend Fasern, welche jeweils in einem thermoplastischen Kunststoff eingebettet sind,
(B) Thermoverformen der mindestens einen ersten Lage Verbundwerkstoff (6) zu einer unteren Sitzschale,
(C) Thermoverformen der mindestens einen zweiten Lage Verbundwerkstoff (5) zu einer oberen Sitzschale,
(D) Anordnen der unteren Sitzschale und der oberen Sitzschale in einem Werkzeug, so dass zwischen den beiden Sitzschalen ein Spalt ausgebildet wird,
(E) Einbringen von aufgeschäumten Partikeln aus einem thermoplastischen Kunststoff (7) in den Spalt,
(F) Verpressen der beiden Sitzschalen und der aufgeschäumten Partikel, um den Sitz zu erhalten.

2. Verfahren nach Anspruch 1, **dadurch gekennzeichnet, dass** die Fasern Endlosfasern sind, die innerhalb der jeweiligen Lage unidirektional ausgerichtet sind.

3. Verfahren nach einem der Ansprüche 1 bis 2, **dadurch gekennzeichnet, dass** jeweils mehr als eine erste oder mehr als eine zweite Lage Verbundwerkstoff (6, 5) übereinander vorliegen, wobei die Endlosfasern in benachbarten Lagen zueinander einen Winkel von 30° bis 130° aufweisen.

4. Verfahren nach einem der Ansprüche 1 bis 3, **dadurch gekennzeichnet, dass** die Fasern in dem Verbundwerksoff in einem auf Homopolycarbonat und/oder Copolycarbonat basierenden Kunststoff eingebettet sind.

5. Verfahren nach einem der Ansprüche 1 bis 4, **dadurch gekennzeichnet, dass** der geschäumte thermoplastische Kunststoff ein auf einem Homopolycarbonat und/oder Copolycarbonat basierender Kunststoff ist.

6. Verfahren nach einem der Ansprüche 1 bis 5, **dadurch gekennzeichnet, dass** der Sitz aus einem entsprechend geformten, mehrschichtigen Strukturbauteil (1) besteht.

7. Verfahren nach Anspruch 6, **dadurch gekennzeichnet, dass** das mehrschichtige Strukturbauteil (1) ein Rückenteil (3), ein Sitzteil (2) und einen das Rückenteil (3) und das Sitzteil (2) verbindenden Bereich (4) umfasst.

8. Verfahren nach einem der Ansprüche 1 bis 7, **dadurch gekennzeichnet, dass** auf der Außenseite der ersten und/oder der zweiten Lage Verbundwerkstoff (6, 5) wenigstens eine schützende, dekorative, die Haptik verbessernde und/oder den Sitzkomfort verbessernde Beschichtung vorliegt.

9. Verfahren nach einem der Ansprüche 1 bis 8, **dadurch gekennzeichnet, dass** die Dichte des geschäumten thermoplastischen Kunststoffs, 0,03 bis 0,7 g/cm³, bevorzugt 0,15 bis 0,5 g/cm³, besonders bevorzugt 0,2 bis 0,25 g/cm³, beträgt.

10. Verfahren nach einem der Ansprüche 1 bis 9, **dadurch gekennzeichnet**, das Schritt (B) und Schritt (C) jeweils bei einer Temperatur von 290 bis 300 °C, einem Druck von 10 bis 100 bar(a) für eine Zeit von 90 bis 120 s erfolgen.

## Claims

1. Process for producing a seat, comprising at least the following steps:
(A) provision of at least one first and at least one second layer of composite material (6, 5), in each case containing fibres which in each case are embedded in a thermoplastic polymer,
(B) thermoforming of the at least one first layer of composite material (6) to form a lower seat shell,
(C) thermoforming of the at least one second layer of composite material (5) to form an upper seat shell,
(D) positioning of the lower seat shell and the upper seat shell in a tool so that a gap is formed between the two seat shells,
(E) introduction of foamed particles composed of a thermoplastic polymer (7) into the gap and
(F) pressing together of the two seat shells and the foamed particles in order to obtain the seat.

2. Process according to Claim 1, **characterized in that** the fibres are continuous fibres which are oriented unidirectionally within the respective layer.

3. Process according to either of Claims 1 to 2, **characterized in that** in each case more than one first or more than one second layer of composite material (6, 5) are present on top of one another, with the continuous fibres in adjacent layers being at an angle of from 30° to 130° to one another.

4. Process according to any of Claims 1 to 3, **characterized in that** the fibres in the composite material are embedded in a homopolycarbonate- and/or copolycarbonate-based polymer.

5. Process according to any of Claims 1 to 4, **characterized in that** the foamed thermoplastic polymer is a homopolycarbonate- and/or copolycarbonate-based polymer.

6. Process according to any of Claims 1 to 5, **characterized in that** the seat consists of an appropriately shaped, multilayer structural component (1) .

7. Process according to Claim 6, **characterized in that** the multilayer structural component (1) comprises a backrest part (3), a seat part (2) and a region (4) connecting the backrest part (3) and the seat part (2).

8. Process according to any of Claims 1 to 7, **characterized in that** at least one protective coating, decorative coating, coating which improves the feel and/or coating which improves the seating comfort is present on the outside of the first and/or second layer of composite material (6, 5).

9. Process according to any of Claims 1 to 8, **characterized in that** the density of the foamed thermoplastic polymer is from 0.03 to 0.7 g/cm³, preferably from 0.15 to 0.5 g/cm³, particularly preferably from 0.2 to 0.25 g/cm³.

10. Process according to any of Claims 1 to 9, **characterized in that** step (B) and step (C) are each carried out at a temperature of from 290 to 300°C, a pressure of from 10 to 100 bar(a) for a time of from 90 to 120 s.

## Revendications

1. Procédé pour la fabrication d'un siège, comprenant au moins les étapes suivantes :
(A) mise à disposition d'au moins une première et d'au moins une deuxième couche de matériau composite (6, 5) contenant à chaque fois des fibres qui sont à chaque fois incorporées dans un matériau synthétique thermoplastique,
(B) thermoformage de ladite au moins une première couche de matériau composite (6) en une coque inférieure de siège,
(C) thermoformage de ladite au moins une deuxième couche de matériau composite (5) en une coque supérieure de siège,
(D) disposition de la coque inférieure de siège et de la coque supérieure de siège dans un outil de telle sorte qu'une fente est formée entre les deux coques de siège,
(E) introduction de particules moussées en un matériau synthétique thermoplastique (7) dans la fente,
(F) compression des deux coques de siège et des particules moussées pour obtenir le siège.

2. Procédé selon la revendication 1, **caractérisé en ce que** les fibres sont des fibres continues qui sont orientées dans chaque couche de manière unidirectionnelle.

3. Procédé selon l'une des revendications 1 à 2, **caractérisé en ce qu'**à chaque fois plus d'une première couche ou plus d'une deuxième couche de matériau composite (6, 5) sont disposées les unes au-dessus des autres, les fibres continues dans des couches adjacentes présentant un angle de 30° à 130° les unes par rapport aux autres.

4. Procédé selon l'une des revendications 1 à 3, **caractérisé en ce que** les fibres dans le matériau composite sont incorporées dans un matériau synthétique à base d'homopolycarbonate et/ou de copolycarbonate.

5. Procédé selon l'une des revendications 1 à 4, **caractérisé en ce que** le matériau synthétique thermoplastique moussé est un matériau synthétique à base d'homopolycarbonate et/ou de copolycarbonate.

6. Procédé selon l'une des revendications 1 à 5, **caractérisé en ce que** le siège est constitué par un composant structural (1) multicouche façonné de manière correspondante.

7. Procédé selon la revendication 6, **caractérisé en ce que** le composant structural (1) multicouche comprend une partie dossier (3), une partie siège (2) et une zone (4) reliant la partie dossier (3) et la partie siège (2).

8. Procédé selon l'une des revendications 1 à 7, **caractérisé en ce qu'**au moins un revêtement de protection, décoratif, améliorant le toucher et/ou améliorant le confort d'assise se trouve sur la face externe de la première et/ou de la deuxième couche de matériau composite (6, 5).

9. Procédé selon l'une des revendications 1 à 8, **caractérisé en ce que** la densité du matériau synthétique thermoplastique moussé est de 0,03 à 0,7 g/cm³, de préférence de 0,15 à 0,5 g/cm³, de manière particulièrement préférée de 0,2 à 0,25 g/cm³.

10. Procédé selon l'une des revendications 1 à 9, **caractérisé en ce que** l'étape (B) et l'étape (C) sont à chaque fois effectuées à une température de 290 à 300°C, à une pression de 10 à 100 bar (a) pendant une durée de 90 à 120 s.
